# EUROPEAN PATENT APPLICATION

(11) **EP 1 980 837 A1**
(43) Date of publication of application: **15.10.2008**
(21) Application number: 07707691.7
(22) Date of filing: 30.01.2007
(51) Int. Cl.: G01N 15/02, G01N 15/06

(54) **PARTICLE MEASURING APPARATUS**

(30) Priority: 01.02.2006 JP 2006024126
(71) Applicant: National University Corporation Kanazawa University, Kanazawa-shi, Ishikawa 920-1164 (JP); Rion Co., Ltd., Tokyo 185-8533 (JP)
(72) Inventor: OTANI, Yoshio, Kanazawa-shi, Ishikawa 920-1164 (JP); ICHIJO, Kazuo, Kokubunji-shi, Tokyo 185-8533 (JP)
(74) Representative: Jenkins, Peter David
(86) International application number: PCT/JP2007/051471
(87) International publication number: WO 2007/088842

(57) **Abstract**

The object of the present invention is to provide a particle counter which can accurately count the number of particles contained in fluid where the number concentration of particles is high. The particle counter includes a particle removing portion for removing particles contained in fluid at a predetermined rate, a sensor portion for counting the particles passing through the particle removing portion, and a particle number correcting means comprising a characteristic data memory and a digital signal processor for performing correction processing to the number of the particles counted in the sensor portion by using removal characteristics of the particle removing portion with respect to the particle diameter.

## Description

### Technical Field

The present invention relates to a particle counter which can count the number of particles contained in fluid where the number concentration of particles is high.

### Background Art

Particles contained in the air affect human health when the particles are inhaled and stored in the lungs. In a case where the size and composition of particles are uniform, as the number concentration becomes greater, the influence to human health becomes more serious. Also, the influence to human health greatly depends on the part of a lung where particles are stored, and the size of particles determines the position where the particles are stored. Therefore, it is necessary to know the relationship between the size and the number of particles in a high number concentration in order to assess influence of particles suspended in the air on human health.

As a conventional method for measuring suspended particles, there is a method in which particles are captured by a filter and the mass of the particles is measured. However, it is impossible to know the relationship between the size and the number of the particles in this method. Also, as a device for measuring the diameter and the number of particles, there is a light scattering type particle measuring device, a device in which a differential mobility analyzer (DMA) is combined with a condensation nucleus counter (CNC), an electric low pressure impactor (ELPI), or the like. However, theoretically, these devices cannot count the number correctly when the number concentration of particles in a sample is high.

In order to solve these problems, several methods have been used. For example, in the light scattering type particle measuring device, the size of particles is measured based on the intensity of scattered light when the particles pass through a light beam, and the number of the particles is counted based on the pulse number of the scattered light. In this method, as the number concentration of the particles becomes higher, the probability that plural particles pass through a light beam at the same time becomes higher, which makes it difficult to measure the correct number of particles.

Also, another method has been employed in a light scattering type particle measuring device for measuring a sample having a high number concentration of particles. According to this method, a detecting region of particles (formed by a light beam and a condensing optical system for scattered light) is arranged to be very small so as to decrease the probability that plural particles enter the detecting region at the same time. There is also another method in which the number concentration of particles is reduced with a dilution device (for diluting sample air with clean air) provided at an entrance for sample air in a particle counter for a common clean room.

However, the light scattering type particle measuring device in which the detecting region of particles is arranged to be very small has a drawback that the intensity of the scattered light is not uniform because this device uses a narrow light beam, which causes the particles to pass through different intensities of the light beam. The non-uniform intensity of the scattered light will deteriorate the resolution of a particle diameter. Also, if this type particle measuring device is used in a state where the number concentration is low, the particle number to be monitored becomes small, which results in large statistic measurement error. As for a device in which a differential mobility analyzer (DMA) is combined with a condensation nucleus counter (CNC), or an electric low pressure impactor (ELPI), it is necessary to charge the device in advance. However, it is known that charge efficiency is deteriorated when the number concentration of particles is high. Also, in the case of the dilution device, it is difficult to accurately count the number of particles because the particle loss in the dilution device depends on the size of the particle, which varies the dilution ratio by the size of the particle, and makes it difficult to keep the dilution ratio uniform.

The present invention was made to solve the above-mentioned drawbacks of the conventional technique. The object of the present invention is to provide a particle counter which can count the number of particles contained in fluid where the number concentration of particles is high.

### Disclosure of the Invention

In order to solve the above-mentioned drawbacks, according to a first aspect of the present invention, there is provided a particle counter comprising a particle removing means for removing particles contained in fluid at a predetermined rate, and a particle counting means for counting the particles passing through the particle removing means. Examples of the particle removing means include a filter, a mesh, a capillary tube, a tube, a diffusion battery, and an impactor. Combinations thereof are also possible.

According to a second aspect of the present invention, the above-mentioned particle counter further comprises a particle number correcting means for performing correction processing to the number of the particles counted in the particle counting means by using removal characteristics of the particle removing means with respect to the particle diameter.

According to the first aspect of the present invention, with the provision of the particle removing means, it is possible to measure an object in a state where the concentration of the object is adjusted to be suitable for a light scattering type or shielding type particle counter. For example, in a case of fluid which has passed through a filter having a particle removing efficiency of 99 %, the particle number concentration of 1 % will be measured. Therefore, it becomes possible to perform measurement in an environment of a 100 times higher concentration with respect to an applicable concentration of the particle counter. Further, the concentration at the exit of the filter can be easily adjusted by changing the thickness of the filter even if the sampling flow rate is the same, or the range of the captured particle diameter can be adjusted by changing the diameter of the fiber, so that measurement in various environments can be performed with a single particle counter.

According to the second aspect of the present invention, with the provision of a filter and a particle number correcting means in a light scattering type or shielding type particle counter, it is possible to perform measurement in various environments with a single particle counter. Also, since the actual particle number is counted, it is possible to reduce the error when environmental data is measured to make regulations and the like.

### Brief Description of the Drawings

FIG. 1 shows the structure of a particle counter according to the present invention;
FIG. 2 shows a view explaining the arrangement of a light source, a condensing lens for irradiation, a condensing lens for receiving light, and a photoelectric transducer element;
FIG. 3 shows an example of the relationship between the particle diameter and the removing efficiency in the particle removing portion; and
FIG. 4 shows an example of the relationship between the particle diameter and the particle number.

### Best Mode for Carrying Out the Invention

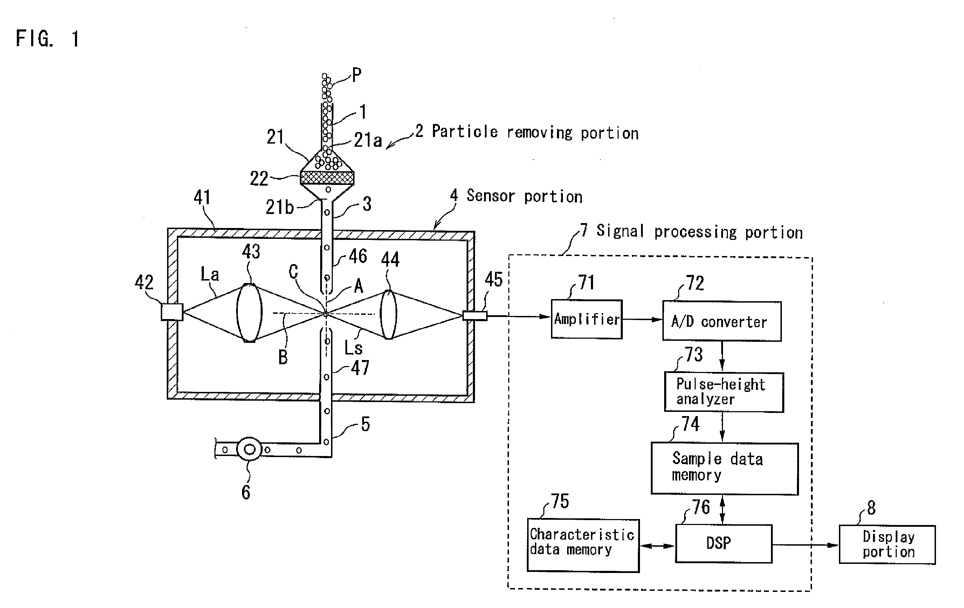

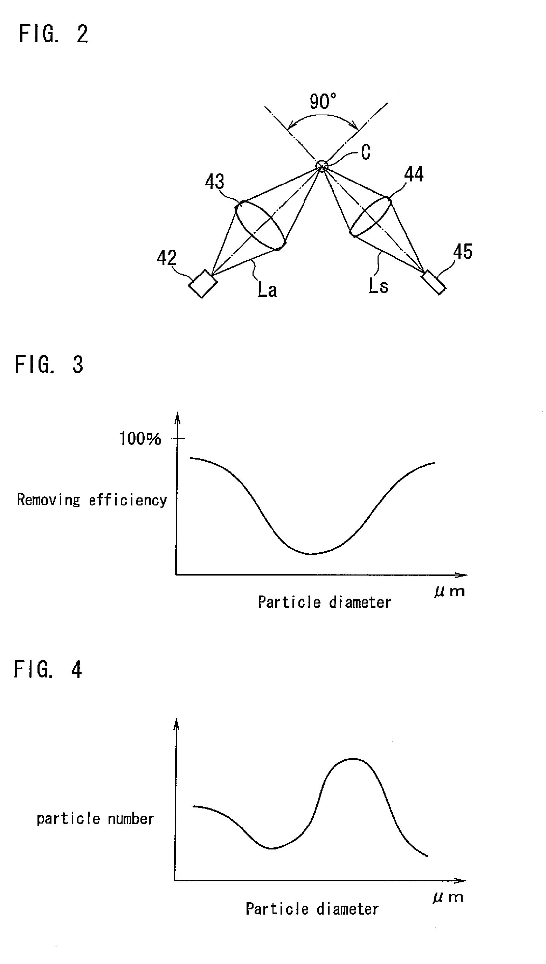

Preferred embodiments of the present invention will now be described with reference to the accompanying drawings. FIG. 1 shows the structure of a particle counter according to the present invention, and FIG. 2 shows a view explaining the arrangement of a light source, a condensing lens for irradiation, a condensing lens for receiving light, and a photoelectric transducer element.

As shown in FIG. 1, the particle counter of the present invention comprises an inlet tube 1, a particle removing portion 2, a sampling tube 3, a sensor portion 4, an exhaust tube 5, a pump 6, a signal processing portion 7, and a display portion 8. Particles P contained in air to be monitored are detected, and the number of the particles is displayed per each particle diameter.

The particle removing portion 2 comprises a case 21 and a particle removing member 22. Preferably, the particle removing member 22 is made of fiber. The particle removing member 22 has predetermined characteristics of the removing efficiency with respect to the particle diameter. Examples of the particle removing member include a filter, a fiber, a mesh, a capillary tube, a tube, a diffusion battery, and an impactor. A combination thereof is also possible. The particle removing member 22 is attached to the case 21 in an exchangeable state. The case 21 is provided with an inlet port 21a and an outlet port 21b. The inlet tube 1 is connected to the inlet port 21a, and an end of the sampling tube 3 is connected to the outlet port 21b. By regularly exchanging the particle removing member 22, it is possible to maintain the removing efficiency of the particle removing portion 2.

The sensor portion 4 is comprised of a case 41, a light source 42, a condensing lens for irradiation 43, a condensing lens for receiving light 44, a photoelectric transducer element 45, an inlet nozzle 46, and an outlet nozzle 47. The inlet nozzle 46 and the outlet nozzle 47 are opposed at a predetermined interval within the case 41. The light source 42 and the photoelectric transducer element 45 are disposed in a flat plane B perpendicular to a center axis A of a flow passage which flows from the inlet nozzle 46 to the outlet nozzle 47.

The inlet nozzle 46 is connected to the other end of the sampling tube 3, and the outlet nozzle 47 is connected to an end of the exhaust tube 5. The pump 6 is connected to the other end of the exhaust tube 5. Air containing fine particles to be monitored is allowed to flow into the particle removing portion 2 through the inlet tube 1 by aspiration operation of the pump 6.

As shown in FIG. 2, the light source 42 and the photoelectric transducer element 45 are disposed in the flat plane B such that the directions of the light source 42 and the photoelectric transducer element 45 are perpendicular to each other with respect to the intersection point C of the center axis A and the flat plane B. The condensing lens for irradiation 43 is disposed between the light source 42 and the intersection point C. The condensing lens for receiving light 44 is disposed between the photoelectric transducer element 45 and the intersection point C. The focal point of the condensing lens for irradiation 43 and the focal point of the condensing lens for receiving light 44 are adjusted to correspond to the intersection point C, respectively. The intersection point C serves as a particle detecting region.

The signal processing portion 7 is comprised of an amplifier 71, an A/D converter 72, a pulse-height analyzer 73, a sample data memory 74, a characteristic data memory 75, and a DSP (digital signal processor) 76. The amplifier 71 amplifies the output signal of the photoelectric transducer element 45 for output. The A/D converter 72 converts the output signal of the amplifier 71 into a digital signal. The pulse-height analyzer 73 measures the peak voltage value of the pulse signal outputted from the A/D converter 72 so as to output the value as data.

The sample data memory 74 stores data outputted from the pulse-height analyzer 73 for a predetermined sampling period, and outputs data to the DSP 76 at the request of the DSP 76. The characteristic data memory 75 stores data of the removing efficiency characteristics of the particle removing portion 2 with respect to the particle diameter as shown in FIG. 3, and outputs data to the DSP 76 at the request of the DSP 76.

The DSP 76 performs correction processing to the data stored in the sample data memory 74 with reference to the data stored in the characteristic data memory 75. A particle number correcting means is constructed of the characteristic data memory 75 and the DSP 76. Since the removing efficiency characteristics of the particle removing member 22 with respect to the particle diameter can be obtained by measurement, correction processing can be performed with any particle removing member 22.

The display portion 8 displays the output of the DSP 76 (particle number per each particle diameter) as shown in FIG. 4.

Next, the operation of the particle counter having the above-described structure will be explained. First, air containing particles P to be monitored is allowed to flow into the particle removing portion 2 through the inlet tube 1 by the pump 6. The air to be monitored passes through the particle removing member 22 within the particle removing portion 2. If the particle removing efficiency of the particle removing member 22 is 99.9 %, the concentration of the particles becomes 1/1000 after passing through the particle removing member 22 compared to the concentration before passing through the particle removing member 22.

Next, the air to be monitored flows through the sampling tube 3, the inlet nozzle 46, the intersection point C, and the outlet nozzle 47. The air flowing into the outlet nozzle 47 enters the exhaust tube 5 so as to be exhausted from the pump 6. Light La radiated from the light source 42 is condensed by the condensing lens 43 at the intersection point C, and scattered light Ls is generated when a particle passes through the intersection point C.

The scattered light Ls is condensed by the condensing lens for receiving light 44, and received by the photoelectric transducer element 45. Since particles pass through the intersection point C one by one at a certain interval, the scattered light Ls is generated discontinuously, so that the electric signal output of the photoelectric transducer element 45 becomes pulse. The brightness of the scattered light Ls depends on the particle diameter, that is, the brightness becomes larger as the particle diameter increases. Therefore, the value of the pulse height of the output signal from the photoelectric transducer element 45 becomes larger as the particle diameter increases.

The output signal from the photoelectric transducer element 45 is inputted to the signal processing portion 7. In the signal processing portion 7, the output signal from the photoelectric transducer element 45 is amplified in the amplifier 71, and thereafter digitized in the A/D converter 72 and taken into the pulse-height analyzer 73. In the pulse-height analyzer 73, the peak voltage of the sampled pulse waveform is obtained, and the obtained value is stored in the sample data memory 74 as sample data of a predetermined sampling period such as a flow rate of 1 liter.

After sampling for a predetermined period is finished, the DSP 76 calculates the particle diameter and the number of the particles per each particle diameter based on the data of the sample data memory 74. The DSP 76 further performs correction processing to the number of the particles per each particle diameter into the number of the particles contained in the air before passing through the particle removing portion 2 with reference to the removing efficiency characteristics of the particle removing portion 2 stored in the characteristic data memory 75. For example, if the removing efficiency for the particle diameter of 1 µm is 90% and the removing efficiency for the particle diameter of 3 µm is 99%, a single particle having a diameter of 1 µm is corrected into ten particles and a single particle having a diameter of 3 µm is corrected into hundred particles. The data of the particle diameter and the particle number corrected in the DSP 76 is displayed on the display portion 8.

The correction processing in the DSP 76 can be performed as real-time processing of sample data. Specifically, in the DSP 76, the correction processing can be performed by sequentially referring to the removing efficiency characteristics of the particle removing portion 2 stored in the characteristic data memory 75.

The above-described embodiment is not limited to this, and various modifications are possible within the scope of the claimed invention. For example, the present invention can be applied to all particle counters such as a device in which a differential mobility analyzer (DMA) and a condensation nucleus counter (CNC) are combined, an electric low pressure impactor (ELPI), or a particle counter for particles contained in liquid.

### Industrial Applicability

By selecting a particle removing member corresponding to the measurement environment, it is possible to perform particle counting in various environments and enlarge the use of a single particle counter.

## Claims

1. A particle counter comprising:
a particle removing means for removing particles contained in fluid at a predetermined rate; and
a particle counting means for counting the particles passing through the particle removing means.

2. The particle counter according to claim I, further comprising a particle number correcting means for performing correction processing to the number of the particles counted in the particle counting means by using removal characteristics of the particle removing means with respect to the particle diameter.
